# EUROPEAN PATENT APPLICATION

(11) **EP 4 768 168 A1**
(43) Date of publication of application: **01.07.2026**
(21) Application number: 25807922.7
(22) Date of filing: 16.01.2025
(51) Int. Cl.: B23K 26/16, B23K 26/08, H01M 4/04

(54) **NOTCHING TAB SCRAP SUCTION APPARATUS**

(30) Priority: 22.05.2024 KR 20240066762
(71) Applicant: LG Energy Solution, Ltd., Seoul 07335 (KR)
(72) Inventor: KIM, Sangyeol, Daejeon 34122 (KR); PARK, Sang Rin, Daejeon 34122 (KR); PARK, Jongsik, Daejeon 34122 (KR); LEE, Je Jun, Daejeon 34122 (KR); KIM, Mingyu, Daejeon 34122 (KR); JEON, Sunghyun, Daejeon 34122 (KR)
(74) Representative: Goddar, Heinz J.
(86) International application number: PCT/KR2025/000950
(87) International publication number: WO 2025/244239

(57) **Abstract**

A notched tab scrap suction apparatus is disclosed. The scrap suction apparatus includes: a notched tab processing unit cutting a non-coated area provided at one widthwise end of an electrode traveling in lengthwise direction thereof to form a notched tab portion; a first roller provided under the notched tab processing unit and having a lower circumferential surface in contact with the electrode and the scrap traveling downward from the notched tab processing unit to change a traveling direction of the electrode and the scrap to a first direction; a second roller spaced apart from the first roller in the first direction and having a upper circumferential surface in contact with the electrode and the scrap traveling in the first direction to change a traveling direction of the electrode and the scrap to a second direction; and a suction unit spaced apart from the second roller in the second direction and positioned under the electrode traveling in the second direction.

## Description

### [TECHNICAL FIELD]

This application claims the benefit of priority based on Korean Patent Application No. 10-2024-0066762 filed on May 22, 2024, entire content disclosed in the document of the patent applications is included as a part of this specification.

The present invention relates to a notched tab scrap suction apparatus capable of preventing vibration of a non-coated area caused by a scrap, preventing notched tabs from being caught and bent, and reducing the electrode defective rate.

### [BACKGROUND ART]

Generally, secondary batteries include an anode, a cathode and an electrolyte, and generate electrical energy using chemical reactions. The use of secondary batteries is gradually increasing due to the advantage of being able to charge and discharge. Since lithium secondary batteries among such secondary batteries have a high energy density per unit weight, lithium secondary batteries are widely used as a power source for electronic communication devices or as a driving source for high-output hybrid vehicles and electric vehicles.

In terms of the shape of these secondary batteries, demand is increasing for prismatic secondary batteries and pouch-type secondary batteries that may be applied to products such as mobile phones due to their thin thickness. In terms of materials of secondary batteries, demand is increasing for lithium secondary batteries such as lithium-ion batteries and lithium-ion polymer batteries with high energy density, discharge voltage and output stability.

In terms of the shape of these secondary batteries, demand is increasing for prismatic secondary batteries and pouch-type secondary batteries that may be applied to products such as mobile phones due to their thin thickness. In terms of materials of secondary batteries, demand is increasing for lithium secondary batteries such as lithium-ion batteries and lithium-ion polymer batteries with high energy density, discharge voltage and output stability.

The types of secondary batteries widely used today include lithium ion batteries, lithium polymer batteries, nickel cadmium batteries, nickel hydrogen batteries and nickel zinc batteries. The operating voltage of these unit secondary batteries, i.e. unit battery cells is approximately 2.5V to 4.2V. Therefore, when a higher output voltage is required, a battery pack is constituted by connecting multiple battery cells in series. In addition, a battery pack is constituted by connecting multiple battery cells in parallel according to the charge and discharge capacity required for the battery pack. Accordingly, the number of battery cells and the electrical connection structure of the battery pack may be selected in various ways according to the required output voltage or charge and discharge capacity.

Meanwhile, regarding types of unit secondary battery cells, cylindrical, square, and pouch-type battery cells are known. In the case of a cylindrical battery cell, a separator, which is an insulator, is interposed between electrodes of opposite polarities (anode and cathode), and the electrodes and the separators are wound into a cylindrical shape to form a jelly-roll type electrode assembly. The electrode assembly is inserted into a battery can, and a disc-shaped upper insulating member is attached above the electrode assembly.

The electrode of the electrode assembly is manufactured through a coating process, a slitting process and a notching process.

In the coating process, an active material is applied to the surface of a collector and then pressed. The active material applied to the collector is dried at a high temperature to manufacture an electrode sheet. The width of the electrode sheet may be several to several tens of times the width of the electrode.

In the slitting process, the electrode sheet is aligned in a lengthwise direction and cut at regular intervals in a widthwise direction to manufacture a plurality of electrodes. The electrode includes a coated area 11 having an active material coated thereon, and a non-coated area 12 without the active material coated thereon. The non-coated area 12 is significantly narrower than the non-coated area 12. The non-coated area 12 may be in the form of a stripe arranged at one widthwise end or the other widthwise end of the electrode. Since a plurality of electrodes are manufactured simultaneously by cutting a wide electrode sheet in widthwise direction, the manufacturing time of the electrode may be shortened.

In the notching process, sawtooth tabs are formed in the non-coated area of the electrode. The tabs may be formed by a laser from a laser notching unit. Scraps are generated during the process in which the tabs are formed in the non-coated area. Scrap is the part removed from the non-coated area and is formed long along the lengthwise direction of the electrode. The electrode and scrap are transported by a plurality of transport rollers. The vacuum suction hood is placed under the laser notching unit to collect the scrap cut out of the non-coated area by the vacuum suction force.

However, since the conventional vacuum suction hood is placed under the laser notching unit, the vacuum suction force of the vacuum suction hood is directly applied to the scrap under the laser notching unit. When the scrap vibrates due to the vacuum suction force, the vibration of the scrap is transmitted to the electrode. When the non-coated area of the electrode is slightly shaken by the vibration of the scrap, the laser irradiation position may shake or change in the non-coated area, which may cause processing defects in the notching unit.

In addition, since the suction end of the vacuum suction hood is placed at an angle with respect to the transport direction of the electrode, electrode defects may be generated as the tabs get caught at the suction end of the vacuum suction hood or bent while the electrode is being transported.

In addition, in order to prevent the tabs of the electrode from being caught at the suction end of the vacuum suction hood, the vacuum suction hood may be arranged at an angle with respect to the direction of gravity. In such case, when the scrap is sucked into the vacuum suction hood, the scrap may be caught on the inner surface of the vacuum suction hood, causing the vacuum suction hood to be blocked. When the vacuum suction hood is blocked and the scrap cannot be discharged through the vacuum suction hood, the notching process may be halted.

The background art of the present invention is disclosed in Korean Patent Application Publication No. 2023-0094433 (published on June 28, 2023, titled: LASER NOTCHING APPARATUS CAPABLE OF COLLECTING SCRAP).

### [DISCLOSURE]

### [TECHNICAL PROBLEM]

In order to solve above-described problems, it is an object of the present invention to provide a notched tab scrap suction apparatus capable of preventing vibration of the scrap portion near the suction unit from being transmitted to the electrode portion of the notched tab processing unit.

It is an object of the present invention to provide a notched tab scrap suction apparatus capable of offsetting vibration transmitted to the scrap by a second roller and a first roller.

It is an object of the present invention to provide a notched tab scrap suction apparatus capable of preventing the notched tab of the electrode from interfering with or being caught and bent in the suction end of the suction unit.

It is an object of the present invention to provide a notched tab scrap suction apparatus capable of allowing the scrap to be sucked into the suction unit along the direction of gravity and preventing the blocking of the interior of the suction unit by the scrap.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

The present invention provides a scrap suction apparatus.

The scrap suction apparatus includes a suction unit. The suction unit sucks in a scrap generated when the non-coated area of the electrode is cut off.

The scrap suction apparatus includes a tab processing unit cutting a scrap from a non-coated area provided at one widthwise end of an electrode traveling in lengthwise direction thereof to form tabs at the non-coated area.

The scrap suction apparatus includes a first roller arranged spaced apart from the tab processing unit in traveling direction of the electrode and rotating in a first rotation direction to change the traveling direction of the electrode and the scrap.

The electrode and scrap may travel in the first direction after passing through the first roller.

In order to solve above-described problems, the scrap suction apparatus of the present invention includes a second roller spaced apart from the first roller in the traveling direction of the electrode and rotating in a second rotation direction to change the traveling direction of the electrode and the scrap.

The electrode and scrap may travel in the second direction after passing through the second roller.

The suction unit is disposed spaced apart from the second roller in the traveling direction of the electrode and sucking in the scrap that has passed through the second roller.

Accordingly, the vibration of the scrap generated by the suction unit may be sufficiently alleviated by the contact with the second roller. In addition, the vibration of the scrap that is not completely alleviated by the second roller is definitely absorbed by the first roller wherein the degree of the contact of the scrap with the first roller is in a more tense state than the second roller, thereby definitely preventing the vibration of the scrap from being transmitted to the tab processing unit.

The gradient of the traveling direction of the electrode between the first roller and the second roller is gentler than that of the traveling direction of the electrode between the tab processing unit and the first roller. Accordingly, the scrap may be in contact with the first roller with more tension than the second roller.

Preferably, the first rotation direction and the second rotation direction are opposite each other. Accordingly, the central angle of the section where the electrode and scrap are in contact with the first roller may be further secured.

Preferably, the first roller may be arranged under the tab processing unit, and the electrode and the scrap may travel while being in contact with at least a portion of a lower circumferential surface of the first roller.

Preferably, the electrode and the scrap may travel while being in contact with at least a portion of an upper circumferential surface of the second roller.

Preferably, the electrode and scrap may travel in the first direction between the first roller and the second roller.

Preferably, the first direction may be an upward direction. Accordingly, the electrode, which continues to travel even after the second roller, travels with tension on the first roller, and the scrap entering the suction unit after the second roller may travel by the first roller independent of the electrode.

Preferably, the upper end portion of the second roller may be disposed higher than the lower end portion of the first roller. Accordingly, the first direction may be upward direction.

Preferably, the upper end portion of the second roller may be disposed lower than a rotation center of the first roller. Accordingly, the upward gradient of the first direction may be set to be not too steep but rather gentle enough to be close to horizontal such that the scrap sucked into the suction unit after the second roller may travel smoothly.

Preferably, the diameter of the first roller may be larger than that of the second roller. Accordingly, the traveling radius of the electrode and scrap may be set larger in the first roller having the center angle of the section where the electrode and scrap are wound that is relatively larger than that of the second roller. As a result, the scrap is prevented from being plastically deformed while passing through the first roller such that the scrap, which is subjected to relatively small tension, may travel smoothly.

Preferably, the tab processing unit may be in contact with a first surface of the electrode and guide a travel of the electrode, and the first roller may be in contact with the first surface and guide the travel of the electrode.

Preferably, the second roller may be in contact with a second surface of the electrode opposing to the first surface and guide the travel of the electrode.

In addition, the scrap suction apparatus may further include a scrap guide extending between the tab processing unit and the second roller along the traveling direction of the electrode, wherein the scrap guide faces the first roller with the electrode interposed therebetween and faces the second surface of the scrap.

Preferably, the scrap guide may include a first section extending obliquely in downward direction from under the tab processing unit, a second section under the first roller, and a third section extending from under the first roller to a vicinity of the second roller.

Preferably, the gradient of the third section between the first roller and the second roller may be steeper than that of the first direction which is the traveling direction of the electrode. Accordingly, even when the scrap with weak tension sags between the first roller and the second roller, the scrap guide may smoothly guide the scrap in the traveling direction.

Preferably, the third section may be disposed lower than an upper end portion of the second roller and higher than a lower end portion of the second roller. Accordingly, the gradient of the third section of the scrap guide may be steeper than that of the second direction but still gentler such that the scrap may be guided more smoothly in the traveling direction.

Preferably, a suction end of the suction unit may be parallel to the traveling direction of the electrode facing the suction unit. Accordingly, vibration applied to the electrode and the scrap by the suction unit may be suppressed.

Preferably, the suction unit may extend in a direction substantially orthogonal to the traveling direction of the electrode or extend in vertical direction.

Preferably, the scrap suction apparatus may further include a third roller spaced apart from the second roller in the traveling direction of the electrode, and the suction unit may be arranged between the second roller and the third roller along the traveling direction of the electrode.

Preferably, the second direction which is the traveling direction of the electrode between the second roller and the third roller may be downward direction. Accordingly, the scrap may be stably drawn into to the suction unit.

Preferably, the gradient of the first direction which is the traveling direction of the electrode between the first roller and the second roller may be steeper than that of the second direction which is the traveling direction of the electrode between the second roller and the third roller.

Accordingly, the second direction is more gently downward than the direction in which the scrap enters the suction unit such that the electrode may be suppressed from vibrating due to the suction of the suction unit, and the center angle of the section of the second roller on which the electrode is wound may be secured such that the vibration of the electrode generated by the suction unit may be prevented from being transmitted further upstream than the second roller along the electrode.

In order to solve the above-described problems, a notched tab scrap suction apparatus according to another aspect of the present invention includes: a notched tab processing unit cutting a non-coated area provided at one widthwise end of an electrode traveling in lengthwise direction thereof to form notched tab portion; a first roller provided under the notched tab processing unit and having a lower circumferential surface in contact with the electrode and the scrap traveling downward from the notched tab processing unit to change a traveling direction of the electrode and the scrap to a first direction; a second roller spaced apart from the first roller in the first direction and having a lower circumferential surface in contact with the electrode and the scrap traveling in the first direction to change a traveling direction of the electrode and the scrap to a second direction; and a suction unit spaced apart from the second roller in the second direction and disposed under the electrode traveling in the second direction.

The suction end of the suction unit may be parallel to the traveling direction of the electrode.

The notched tab scrap suction apparatus may further include a third roller disposed spaced apart from and lower than the second roller in the second direction, and the suction end of the suction unit may be inclined such that the second roller side is higher than the third roller side.

The gradient of the first direction may be steeper than that of the second direction.

The upper end portion of the second roller may be disposed higher than the lower end portion of the first roller.

The upper end portion of the second roller may be disposed lower than a rotation center of the first roller.

The diameter of the first roller may be larger than that of the second roller.

The notched tab scrap suction apparatus may further include a first section extending obliquely in downward direction from under the tab processing unit, a second section under the first roller, and a third section extending from under the first roller to a vicinity of the second roller.

The gradient of the third section may be steeper than that of the first direction.

The third section may be disposed lower than the upper end portion of the second roller and higher than the lower end portion of the second roller.

### [ADVANTAGEOUS EFFECTS]

According to the present invention, since the suction unit is arranged far away from under the notched tab processing unit, the vibration of the scrap portion near the suction unit may be prevented from being transmitted to the electrode portion of the notched tab processing unit.

According to the present invention, since the first roller and the second roller are arranged in the section between the notched tab processing unit where the separation of the scrap begins and the suction unit where the vibration of the scrap is generated, the vibration transmitted to the scrap may be offset when the second roller and the first roller come into contact with the scrap.

According to the present invention, since the contactless section and the contacting section are alternately repeated in the opposite direction of the traveling direction of the scrap, the vibration of the scrap may be offset stepwise and section-wise while being transmitted from the suction unit to the notched tab processing unit.

According to the present invention, the vibration of the scrap may be transmitted in the opposite direction of the traveling direction of the scrap. However, since the traveling direction of the scrap is different from section to section, the vibration offset ability of the scrap may be further improved.

According to the present invention, since the suction unit sucks in and collects the scrap at the downstream side of the second roller while the electrode is tautly pulled by the first roller and the second roller, the notched tab portion of the electrode may be prevented from interfering with or being caught and bent by the suction end of the suction unit.

According to the present invention, since the suction end of the suction unit is arranged parallel to the electrode, the suction unit may be erected parallel to the direction of gravity. In addition, since the scrap is drawn into the suction unit along the direction of gravity by the vacuum suction force as the suction unit is erected, the interior of the suction unit may be prevented from being blocked by the scrap.

In addition to the advantageous effects described above, specific effects of the present invention will be described further while describing specific details of the present invention.

### [BRIEF DESCRIPTION OF DRAWINGS]

FIG. 1 is a plan view schematically illustrating an electrode according to the present invention.
FIG. 2 is a plan view schematically illustrating a formation of a notched tab as a non-coated area of an electrode is cut by a laser according to the present invention.
FIG. 3 is a side view schematically illustrating a notched tab scrap suction apparatus according to the present invention.
FIG. 4 is a side view schematically illustrating a scrap being vacuum-sucked into a suction unit of the notched tab scrap suction apparatus of FIG. 3.
FIG. 5 is a side view schematically illustrating a first roller and a second roller installed in the notched tab scrap suction apparatus of FIG. 3.
FIG. 6 is a side view schematically illustrating another embodiment of a suction unit in a notched tab scrap suction apparatus according to the present invention.

### [DESCRIPTION OF REFERENCE NUMERALS]

10: electrode
11: coated area
12: non-coated area
13: notched tab
13a: notched tab
15: scrap
100: notched tab scrap suction apparatus
110: notched tab processing unit
111: laser
120: first roller
122: pressure roller
123: pressure drive unit
130: second roller
140: third roller
150: suction unit
152: suction end
160: scrap guide
161: first section
162: second section
163: third section
T1: first direction
T2: second direction
θ: suction end inclination angle

### [DETAILED DESCRIPTION OF THE PREFERRED EMBODIMENTS]

Hereinafter, a preferred embodiment of the present invention will be described.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a notched tab scrap suction apparatus according to an embodiment of the present invention will be described.

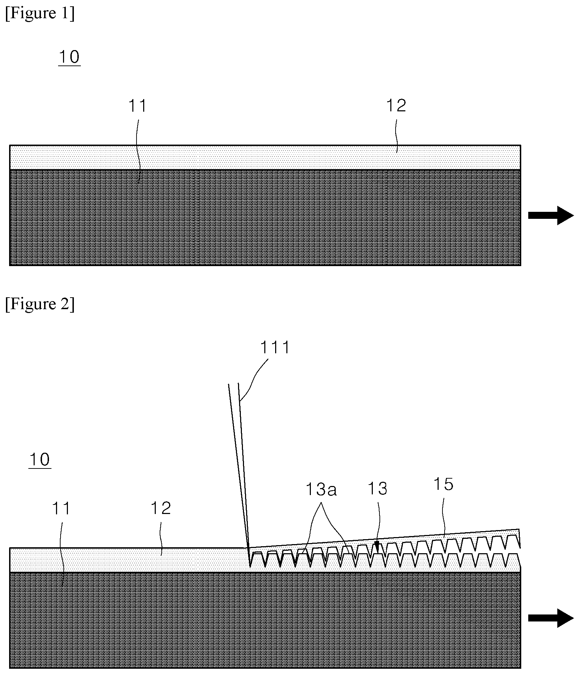

FIG. 1 is a plan view schematically illustrating an electrode according to the present invention, and FIG. 2 is a plan view schematically illustrating a formation of a notched tab as a non-coated area of an electrode is cut by a laser according to the present invention.

Referring to FIGS. 1 and 2, the electrode 10 of the secondary batteries includes an anode and a cathode. The anode is formed by coating an anode active material on the inner surface and outer surface of an anode collector. In addition, the cathode is formed by coating a cathode active material on the inner surface and outer surface of a cathode collector. A separator is laminated between the anode and the cathode, and another separator is laminated on the outer surface of the cathode. The separator prevents the anode and the cathode from being electrically connected.

The thickness of the anode collector may be, for example, 3 to 500µm. The material of the anode collector is not particularly limited as long as it is conductive and does not cause a chemical change in the battery. For example, the anode collector may include stainless steel, aluminum, nickel, titanium or calcined carbon, or made of aluminum or stainless steel subjected to surface treatment with carbon, nickel, titanium, silver, etc. The adhesion of the anode active material may be increased by forming fine unevenness on the surface of the electrode collector. The anode collector may have various forms such as a film, sheet, foil, net, porous body, foam or nonwoven fabric.

The cathode is manufactured by coating and drying cathode active material particles on the cathode collector, and may further include components such as conductive agent, binder, and solvent described above, when necessary.

The thickness of the cathode collector is, for example, 3 to 500µm. The material of the cathode collector is not particularly limited as long as it does not cause chemical changes in the battery and is conductive. For example, the cathode collector may include copper, stainless steel, aluminum, nickel, titanium or calcined carbon, or made of copper or stainless steel subjected to surface treatment with carbon, nickel, titanium, silver, etc., or an aluminum-cadmium alloy. In addition, the bonding strength of the cathode active material may be increased by forming fine unevenness on the surface of the cathode collector, and may have various forms such as a film, sheet, foil, net, porous body, foam or non-woven fabric.

The anode may include a coated anode area 11 coated with an anode active material, and a non-coated anode area 12 at one widthwise end of the anode where the anode active material is not coated. In addition, the cathode may include a coated cathode area 11 coated with a cathode active material, and a non-coated cathode area 12 at one widthwise end of the cathode where the cathode active material is not coated.

The separator includes a porous polymer substrate and a porous coating layer. The polymer substrate is positioned on both sides of the porous polymer substrate. The porous coating layer includes inorganic particles and a binder polymer.

The thickness of the separator may be 1 to 100µm or 5 to 50µm. When the thickness of the separator is less than 1µm, the function of the separator may not be fully realized and mechanical characteristics may be degraded. When the thickness exceeds 100µm, the characteristics of the battery may be degraded during high-rate charge and discharge. In addition, the separator may have a porosity of 40 to 60% and a permeability of 150 to 300 seconds/100mL.

The porous polymer substrate of the separator may include polyethylene or polypropylene series. In addition, coating materials of Al oxide and Si oxide series may be used as inorganic particles in the porous coating layer.

The width of the electrode 10 may be approximately 100mm or more for mass production. The electrode 10 may be manufactured while transporting the collector in the lengthwise direction. The electrode 10 includes a coated area 11 and a second non-coated area 12.

The coated area 11 refers to the surface of the collector where the active material is coated. When the anode active material is coated on the collector, the coated portion is referred to as the coated anode area 11, and when the cathode active material is coated on the collector, the coated portion is referred to as the coated cathode area 11. The coated area 11 may be formed in multiple rows in the lengthwise direction of the collector and in at least two rows in the widthwise direction. Multiple coated areas 11 may be provided in a matrix form on the collector. The coated area 11 is narrower than the collector.

The non-coated area 12 is an area of the collector without the active material coated thereon and provided at one widthwise end of the collector along the lengthwise direction of the collector. The non-coated area 12 may be parallel to the lengthwise direction of the electrode 10. The non-coated area 12 may be formed on one widthwise end or both sides of the coated area 11. The width of the non-coated area 12 may be determined by the size of the coated area 11, the volume and capacity of the electrode assembly, etc.

The coated area 11 and the non-coated area 12 may be formed on the collector while the collector is traveling. The coated area 11 may be formed as a continuous stripe while the collector travels in the lengthwise direction. In addition, the coated areas 11 may be spaced apart at regular intervals while the collector travels in the lengthwise direction, and the non-coated areas 12 may be arranged between the coated areas 11.

A notched tab portion 13 is provided in the non-coated area 12. The notched tab portion 13 may be formed by cutting the non-coated area 12 of the electrode 10 traveling in the lengthwise direction. The notched tab portion 13 may have a shape of a sawtooth. The notched tab portion 13 may include a plurality of notched tabs 13a. The plurality of notched tabs 13a may have the same size or different sizes along the lengthwise direction of the electrode 10. As the notched tab portion 13 is processed in the non-coated area 12, scrap 15 may be generated. The scrap 15 may travel together with the electrode 10.

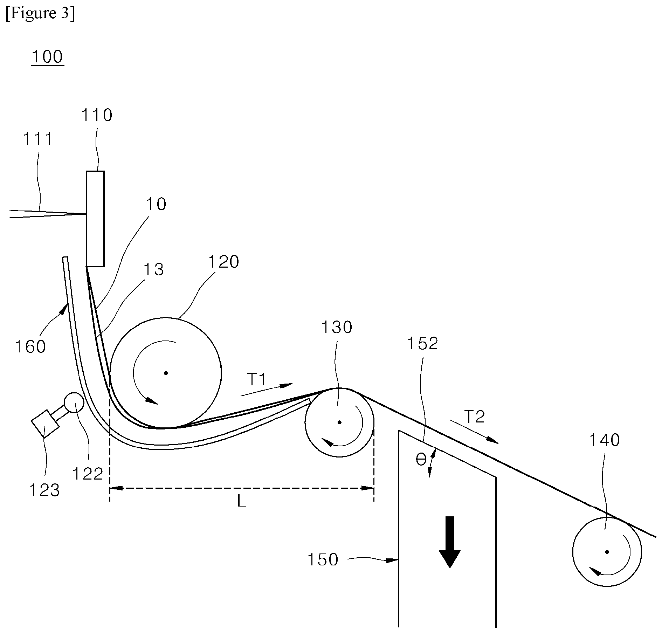

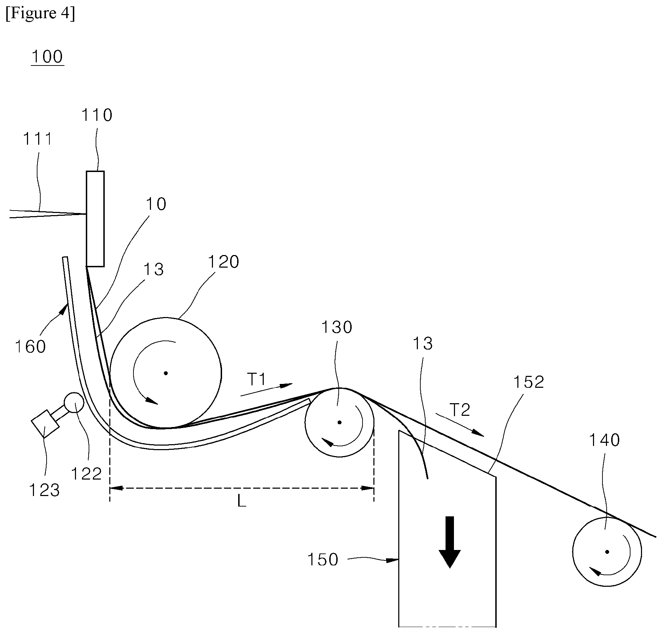

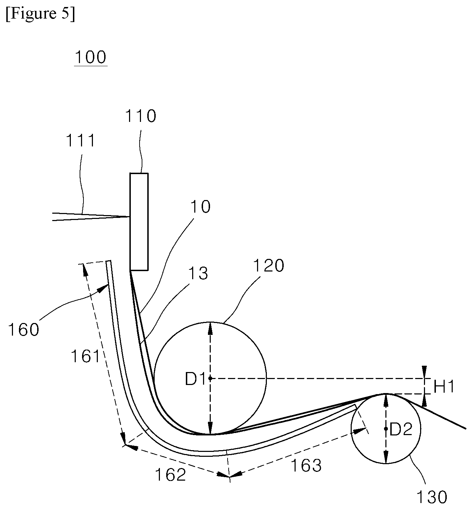

FIG. 3 is a side view schematically illustrating a notched tab scrap suction apparatus according to the present invention, FIG. 4 is a side view schematically illustrating a scrap being vacuum-sucked into a suction unit of the notched tab scrap suction apparatus of FIG. 3, and FIG. 5 is a side view schematically illustrating a first roller and a second roller installed in the notched tab scrap suction apparatus of FIG. 3.

Referring to FIGS. 3 to 5, a notched tab scrap suction apparatus 100 according to an embodiment of the present invention includes a notched tab processing unit 110, a first roller 120, a second roller 130, and a suction unit 150. The notched tab scrap suction apparatus 100 is applied to a notching process for forming the notched tab portion 13 in the electrode 10.

The notched tab processing unit 110 may process the notched tab portion 13 by cutting a non-coated area 12 provided at one widthwise end of an electrode 10 traveling in lengthwise direction. The notched tab processing unit 110 irradiates a laser 111 to the non-coated area 12 of the electrode 10 to cut the non-coated area 12. As the non-coated area 12 is cut, scrap 15 is generated. The scrap 15 may travel together with the electrode 10 while connected to the uncut portion of the non-coated area 12. The scrap 15 may be recovered from the traveling path of the electrode 10 as sucked into the suction unit 150.

The first roller 120 is provided under the notched tab processing unit 110, and the electrode 10 and the scrap 15 traveling downward from the notched tab processing unit 110 travel while being in contact with the lower circumferential surface the first roller 120, thereby changing the traveling direction of the electrode 10 and the scrap 15 to the first direction T1. The electrode 10 travels along the first direction T1 in the section L between the first roller 120 and the second roller 130. The notched tab processing unit 110 may drive the electrode 10 in the downward direction, and the first roller 120 may drive the electrode 10 in the lateral direction. A pressure roller 122 is installed near the first roller 120 to apply pressure to the electrode 10 when the electrode 10 initially enters and comes into contact with the first roller 120. The pressure roller 122 may be installed to be reciprocally moved toward and opposite to the first roller 120 by a cylinder 123. The pressure roller 122 may be positioned under the rotation center of the first roller 120.

The second roller 130 is disposed to be spaced apart from the first roller 120 in the first direction T1, and the electrode 10 and scrap 15 traveling in the first direction T1 from the first roller 120 is in contact with the upper circumferential surface of the second roller 130, thereby changing the traveling direction of the electrode 10 and scrap 15 to the second direction T2. The electrode 10 travels along the second direction T2 in the section between the second roller 130 and the third roller 140.

The suction unit 150 is disposed to be spaced apart from the second roller 130 in the second direction T2 and under the electrode 10 traveling in the second direction T2. Here, the suction unit 150 may be disposed between the second roller 130 and the third roller 140 at a predetermined distance from the electrode 10. A vacuum device (not shown) may be connected to the suction unit 150 to generate a vacuum suction force in the suction unit 150. The suction unit 150 sucks in the scrap 15 traveling together with the electrode 10 and collects the same on the traveling path of the electrode 10.

Since the suction unit 150 is disposed at the exit side of the second roller 130 rather than directly under the notched tab processing unit 110 where the scrap 15 is separated from the non-coated area 12, the scrap 15 may be sucked in and collected by the suction unit 150 after passing through the first roller 120 and the second roller 130.

Accordingly, since the suction unit 150 is arranged far away from under the notched tab processing unit 110, the vibration of the scrap portion near the suction unit 150 may be prevented from being transmitted to the electrode portion (non-coated area portion) of the notched tab processing unit 110.

In addition, since the first roller 120 and the second roller 130 are arranged in the section L between the notched tab processing unit 110 where the separation of the scrap 15 begins and the suction unit 150 where the vibration of the scrap 15 is generated, the vibration transmitted to the scrap 15 may be offset when the second roller 130 and the first roller 120 come into contact with the scrap 15. That is, the vibration of the scrap 15 is primarily offset by coming into contact with the second roller 130, and the vibration of the scrap 15 may be secondarily offset by coming into contact with the first roller 120.

In addition, the scrap 15 in motion has, connected consecutively in order, a first contacting section in contact with the first roller 120, a first contactless section (frictionless section) between the first roller 120 and the second roller 130, a second contacting section in contact with the second roller 130, and a second contactless section between the second roller 130 and the suction unit 150. Accordingly, in the first contacting section and the second contacting section, the vibration of the scrap 15 may be offset by restraint force and friction force, and in the first contactless section and the second contactless section, the vibration of the scrap 15 may be offset by the looseness (tension release) of the scrap 15. Furthermore, since the contactless section and the contacting section are alternately repeated in the opposite direction of the traveling direction of the scrap 15, the vibration of the scrap 15 may be offset stepwise and section-wise while being transmitted from the suction unit 150 to the notched tab processing unit 110.

In addition, while the vibration of the scrap 15 may be transmitted in the opposite direction of the traveling direction of the scrap 15, the vibration offset ability of the scrap 15 may be further improved as the traveling direction of the scrap 15 is different for each section. That is, since the scrap 15 has, connected consecutively in order, the section traveling in the second direction T2, the curved surface section in contact with the second roller 130, the section traveling in the first direction T1, the curved surface section in contact with the first roller 120, the vibration direction is different for each section of the scrap 15. Accordingly, the vibration of the scrap 15 may be prevented from being transmitted to the electrode portion (non-coated area portion) of the notched tab processing unit 110 such that the laser 111 may accurately cut the shape of the notched tab portion 13. Furthermore, the defect rate of the electrode 10 may be significantly reduced.

In addition, since the suction unit 150 sucks in and collects the scrap 15 at the downstream side of the second roller 130 while the electrode is tautly pulled by the first roller 120 and the second roller 130, the notched tab portion 13 of the electrode 10 may be prevented from interfering with or being caught and bent by the suction end 152 of the suction unit 150. Accordingly, the defect rate of the electrode 10 may be further reduced.

The gradient of the first direction T1 may be greater than that of the second direction T2. That is, the inclination angle of the section traveling in the first direction T1 of the electrode portion between the first roller 120 and the second roller 130 may be greater than that of the section traveling in the second direction T2 of the electrode portion between the second roller 130 and the third roller 140. The traveling direction of the electrode 10 and the scrap 15 may be changed to the first direction T1 by the first roller 120 and to the second direction T2 by the second roller 130. As the traveling direction is changed to the first direction T1 and the second direction T2, the areas of the electrode and the scrap 15 in contact with the first roller 120 and the second roller 130 may be adjusted, respectively.

The upper end portion of the second roller 130 may be disposed higher than the lower end portion of the first roller 120. Accordingly, the sections of the electrode 10 and the scrap 15 traveling in the first direction T1 may travel upslope toward the second roller 130. In addition, the scrap 15 connected to the non-coated area 12 may be driven in the second direction T2 while stably being in contact with the upper end portion of the second roller 130.

The upper end portion of the second roller 130 may be disposed lower than the rotation center of the first roller 120 by a predetermined height H1. Here, the upper end portion of the second roller 130 may be disposed in a section having the height H1 between the rotation center of the first roller 120 and the lower end portion of the first roller 120. Accordingly, the area of the electrode 10 and the scrap 15 in contact with the first roller 120 may be prevented from unnecessarily increasing. When the upper end portion of the second roller 130 is disposed higher than the rotation center of the first roller 120, the turning angle of the scrap 15 in the first roller 120 and the second roller 130 may become too large, causing a slipping or lifting of the scrap 15.

The diameter D1 of the first roller 120 may be larger than the diameter D2 of the second roller 130. Accordingly, the area of the first roller 120 in contact with the scrap 15 may be larger than that of the second roller 130 in contact with the scrap 15. In addition, since the vibration offset ability is improved as the contact area between the scrap 15 and the rollers increases, the vibration offset ability of the first roller 120 may be increased compared to that of the second roller 130.

The suction end 152 of the suction unit 150 may be parallel to the electrode 10 traveling in the second direction T2. Accordingly, since the inlet side and the outlet side of the suction end 152 maintain almost the same distance from the electrode 10, the notched tab portion 13 of the electrode 10 may be prevented from interfering with or being caught and bent by the suction end 152 of the suction unit 150. In addition, since the suction end 152 is arranged parallel to the electrode 10, the suction unit 150 may be erected parallel to the direction of gravity. Since the scrap 15 is drawn into the suction unit 150 along the direction of gravity by the vacuum suction force as the suction unit 150 is erected, the interior of the suction unit 150 may be prevented from being blocked by the scrap 15. Furthermore, it is possible to prevent the notching process from being interrupted because the scrap 15 cannot be recovered.

The notched tab scrap suction apparatus 100 may include a third roller 140 spaced apart from the second roller 130 in the second direction T2 and disposed lower than the second roller 130. The third roller 140 may drive the electrode 10 in a direction different from the second direction T2. Since the suction unit 150 is disposed between the second roller 130 and the third roller 140, the scrap 15 is not driven by the third roller 140.

Here, the suction end 152 of the suction unit 150 may be inclined at a predetermined angle θ such that the second roller 130 side is higher than the third roller 140 side. Accordingly, even when the suction end 152 is arranged parallel to the electrode 10 traveling in the second direction T2, the suction unit 150 may be erected parallel to the direction of gravity. Furthermore, the suction direction of the suction unit 150 may be parallel to the direction of gravity, and the scrap 15 may be prevented from being caught and stagnated inside the suction unit 150.

The notched tab scrap suction apparatus 100 may further include a scrap guide 160. The scrap guide 160 may be narrower than the electrode 10. The pressure roller 122 may be arranged next to one widthwise end of the scrap guide 160 to avoid the scrap guide 160.

The scrap guide 160 may include a first section 161 extending obliquely in a downward direction from under the notched tab processing unit 110, a second section 162 under the first roller 120, and a third section 163 extending from under the first roller 120 to a vicinity of the second roller 130. The first section 161 is inclined with respect to the direction of gravity, the second section 162 is rounded to surround the outer periphery of the first roller 120, and the third section 163 may be upslope with respect to the horizontal direction. The lengths and inclination angles of the first section 161, the second section 162 and the third section 163 may be adjusted according to the distance and position between the notched tab processing unit 110, the first roller 120 and the second roller 130. The scrap guide 160 may be overall rounded.

The gradient of the third section 163 may be greater than that of the first direction T1. In order to enable the scrap 15 to travel, one side of the third section 163 may be sufficiently spaced apart from the lower end portion of the first roller 120, and the second widthwise end of the third section 163 may be arranged close to the upper end portion of the second roller 130. Accordingly, the scrap 15 may smoothly move to the upper end portion of the second roller 130 after passing through the third section 163.

The third section 163 may be disposed lower than the upper end portion of the second roller 130 and higher than the lower end portion of the second roller 130. Accordingly, the third section 163 of the scrap guide 160 may be arranged to be inclined so as not to interfere with or get caught by the electrode 10. Since the third section 163 of the scrap guide 160 is arranged to be inclined upward toward the second roller 130, the scrap 15 may be smoothly pushed up to the upper end portion of the second roller 130 by the guidance of the third section 163.

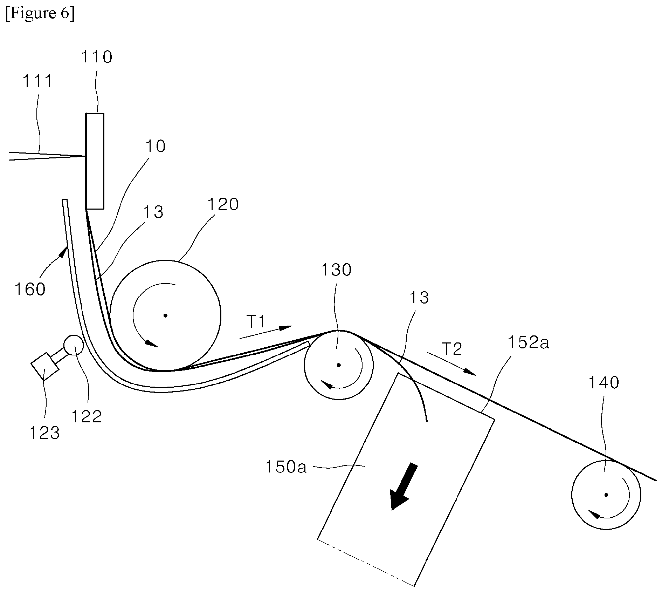

FIG. 6 is a side view schematically illustrating another embodiment of a suction unit in a notched tab scrap suction apparatus according to the present invention.

Referring to FIG. 6, a suction end 152a of a suction unit 150a is parallel to an electrode 10 traveling in the second direction T2, and the suction unit 150a may be arranged at an angle with respect to the direction of gravity.

Since the suction unit 150a is disposed at the exit side of the second roller 130 rather than directly under the notched tab processing unit 110 where the scrap 15 is separated from the non-coated area 12, the scrap 15 may be sucked in and collected by the suction unit 150a after passing through the first roller 120 and the second roller 130.

Accordingly, the notched tab processing unit 110 is spaced far from the suction unit 150a such that vibration of the scrap 15 near the suction unit 150a may be prevented from being transmitted to the electrode portion of the notched tab processing unit 110.

In addition, since the first roller 120 and the second roller 130 are arranged between the notched tab processing unit 110 where the separation of the scrap 15 begins and the suction unit 150a where the vibration of the scrap 15 is generated, the vibration of the scrap 15 transmitted may be offset when the second roller 130 and the first roller 120 come into contact with the scrap 15.

In addition, the scrap 15 in motion has, connected consecutively in order, a first contacting section in contact with the first roller 120, a first contactless section (frictionless section) between the first roller 120 and the second roller 130, a second contacting section in contact with the second roller 130, and a second contactless section between the second roller 130 and the suction unit 150. Accordingly, in the first contacting section and the second contacting section, the vibration of the scrap 15 may be offset by restraint force and friction force, and in the first contactless section and the second contactless section, the vibration of the scrap 15 may be offset by the looseness (tension release) of the scrap 15. Furthermore, since the contactless section and the contacting section are alternately repeated in the opposite direction of the traveling direction of the scrap 15, the vibration of the scrap 15 may be offset stepwise while being transmitted from the suction unit 150a to the notched tab processing unit 110.

Since the scrap 15 has, connected consecutively in order, the section traveling in the second direction T2, the curved surface section in contact with the second roller 130, the section traveling in the first direction T1, the curved surface section in contact with the first roller 120, the vibration direction is different for each section of the scrap 15. Accordingly, the vibration of the scrap 15 may be prevented from being transmitted to the electrode portion (non-coated area portion) of the notched tab processing unit 110.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A scrap suction apparatus comprising:
a tab processing unit cutting a scrap from a non-coated area provided at one widthwise end of an electrode traveling in lengthwise direction thereof to form tabs on the non-coated area;
a first roller arranged spaced apart from the tab processing unit in a traveling direction of the electrode and rotating in a first rotation direction to change the traveling direction of the electrode and the scrap;
a second roller spaced apart from the first roller in the traveling direction of the electrode and rotating in a second rotation direction to change the traveling direction of the electrode and the scrap; and
a suction unit spaced apart from the second roller in the traveling direction of the electrode and sucking in the scrap.

2. The scrap suction apparatus of claim 1, wherein a gradient of the traveling direction of the electrode between the first roller and the second roller is gentler than a gradient of the traveling direction of the electrode between the tab processing unit and the first roller.

3. The scrap suction apparatus of claim 1, wherein the first rotation direction and the second rotation direction are opposite each other.

4. The scrap suction apparatus of claim 1, wherein the first roller is positioned under the tab processing unit, and the electrode and the scrap travel while being in contact with at least a portion of a lower circumferential surface of the first roller.

5. The scrap suction apparatus of claim 4, wherein the electrode and the scrap travel while being in contact with at least a portion of an upper circumferential surface of the second roller.

6. The scrap suction apparatus of claim 5, wherein a first direction being the traveling direction of the electrode between the first roller and the second roller is an upward direction.

7. The scrap suction apparatus of claim 5, wherein an upper end portion of the second roller is positioned higher than a lower end portion of the first roller.

8. The scrap suction apparatus of claim 7, wherein the upper end portion of the second roller is positioned lower than a rotation center of the first roller.

9. The scrap suction apparatus of claim 1, wherein a diameter of the first roller is larger than a diameter of the second roller.

10. The scrap suction apparatus of claim 1, wherein the tab processing unit is in contact with a first surface of the electrode and guides a travel of the electrode, and the first roller is in contact with the first surface and guides the travel of the electrode

11. The scrap suction apparatus of claim 10, wherein the second roller is in contact with a second surface of the electrode opposing to the first surface and guides the travel of the electrode

12. The scrap suction apparatus of claim 11, further comprising a scrap guide extending between the tab processing unit and the second roller along the traveling direction of the electrode, the scrap guide facing the first roller with the electrode interposed therebetween and facing the second surface of the scrap.

13. The scrap suction apparatus of claim 12, wherein the scrap guide comprises a first section extending obliquely in downward direction from under the tab processing unit, a second section passing under the first roller, and a third section extending from under the first roller to a vicinity of the second roller.

14. The scrap suction apparatus of claim 13, wherein a gradient of the third section is steeper than a gradient of a first direction being the traveling direction of the electrode between the first roller and the second roller.

15. The scrap suction apparatus of claim 13, wherein the third section is positioned lower than an upper end portion of the second roller and higher than a lower end portion of the second roller.

16. The scrap suction apparatus of claim 1, wherein a suction end of the suction unit is positioned parallel to the traveling direction of the electrode facing the suction unit .

17. The scrap suction apparatus of claim 16, further comprising a third roller spaced apart from the second roller in the traveling direction of the electrode, wherein the suction unit is positioned between the second roller and the third roller along the traveling direction of the electrode.

18. The scrap suction apparatus of claim 17, wherein a second direction being the traveling direction of the electrode between the second roller and the third roller is a downward direction .

19. The scrap suction apparatus for a notched tab of claim 17, wherein a gradient of a first direction being the traveling direction of the electrode between the first roller and the second roller is steeper than a gradient of a second direction being the traveling direction of the electrode between the second roller and the third roller .

20. The scrap suction apparatus of claim 16, wherein the suction unit extends in a direction substantially orthogonal to the traveling direction of the electrode or extends in a vertical direction.
